# EUROPÄISCHE PATENTSCHRIFT

(11) **EP 0 492 153 B1**
(45) Veröffentlichungstag und Bekanntmachung des Hinweises auf die Patenterteilung: **05.01.1994**
(21) Anmeldenummer: 91120123.4
(22) Anmeldetag: 26.11.1991
(51) Int. Cl.: B60Q 11/00, H05B 39/02

(54) **Verfahren zur Steigerung der Wahrnehmbarkeit einer Signalleuchte an Kraftfahrzeugen**
Process for increasing the visibility of a vehicle warning lamp
Procédé pour augmenter la perception d'une lampe de signalisation d'un véhicule

(30) Priorität: 21.12.1990 DE 4041338
(43) Veröffentlichungstag der Anmeldung: 01.07.1992
(73) Patentinhaber: Bayerische Motoren Werke Aktiengesellschaft, 80788 München (DE)
(72) Erfinder: Fenk, Johann, W-8031 Eichenau (DE); Gase, Hans-Peter, W-8000 München (DE); Huhn, Wolfgang, W-8060 Dachau (DE)

(56) Entgegenhaltungen:
- DE-A- 3 839 761
- FR-A- 2 414 277
- FR-A- 2 467 441
- US-A- 4 390 812

## Beschreibung

Die Erfindung bezieht sich auf ein Verfahren nach dem Oberbegriff des Patentanspruchs 1.

Insbesondere bei schlechten Sichtverhältnissen ist es erforderlich, die Wahrnehmbarkeit einer Signalleuchte zu verbessern. Hierzu gibt es verschiedene Möglichkeiten. So kann beispielsweise die Lichtstärke der Signalleuchte vergrößert werden. Weiter hat es sich gezeigt, daß durch getaktetes Schalten der Signalleuchte die Wahrnehmbarkeit erhöht wird. Bei Verwendung von handelsüblichen Glühlampen jedoch ist durch die Trägheit und die Induktivität des darin verwendeten Glühfadens eine natürliche Grenze für die mögliche Taktfrequenz gesetzt. So sind beispielsweise Taktfrequenzen über 2 Hz nur auf Kosten der erzielbaren maximalen Helligkeit der Glühlampe möglich.

Der Erfindung liegt die Aufgabe zugrunde, ein Verfahren der eingangs genannten Art zu schaffen, bei dem eine deutliche Steigerung der Wahrnehmbarkeit erzielt wird.

Die Lösung dieser Aufgabe ist in den kennzeichnenden Merkmalen des Patentanspruchs 1 angegeben.

Die Vorgabe einer Taktfrequenz von 5 bis z.B. 10Hz ist mit handelsüblichen Glühlampen, die mit der üblichen Bordnetzspannung betrieben werden, nicht realisierbar. Ursache hierfür ist die bei Anlegen der Bordnetzspannung erforderliche Anstiegszeit auf die maximale Helligkeit, die beispielsweise gleich 0,2 Sek. beträgt. Da beim Ausschalten der Glühlampe die Abfallzeit etwa gleich der Anstiegszeit ist, ergibt sich daraus eine maximal mögliche Taktfrequenz von 2,5 Hz. Hier wie im folgenden ist unter der maximalen Helligkeit ein Helligkeitswert zu verstehen, der mindestens gleich 95% der erreichbaren Helligkeit des Leuchtelements beträgt.

Eine Möglichkeit die Erfindung zu realisieren, wird im Patentanspruch 2 angegeben. LED's besitzen einen sehr raschen Anstieg und Abfall der Helligkeit und ermöglichen auch Taktfrequenzen, die weit über der Vorgabe von 5 Hz liegen. Allerdings sind LED's in ihrer Leuchtdichte begrenzt und erfordern bei ihrem Einsatz beispielsweise die gleichzeitige Verwendung mehrerer LED's, um eine vorgegebene Leuchtdichte zu erreichen.

Hinsichtlich der erreichbaren Leuchtdichte ist eine Glühlampe gegenüber einer LED deutlich im Vorteil. Die vorgegebene Taktfrequenz von mindestens 5 Hz läßt sich in diesem Fall mit den Mitteln erreichen, die im Patentanspruch 3 angegeben sind. Die an die Glühlampe angelegte Spannung ist beispielsweise um 1/3 höher gewählt als die tatsächliche Bordnetzspannung. Bei einer Bordnetzspannung von 12 Volt bedeutet dies beispielsweise eine Spannung von 16 Volt. Diese Spannung kann aus der Bordnetzspannung mit Hilfe eines geeigneten Transformators gewonnen werden. Mit einer derartigen Spannung läßt sich die Anstiegsflanke der Helligkeit zu Beginn der Glühlampen-Einschaltzeit deutlich steiler als bei Anlegen der Bordnetzspannung einstellen und damit die Anstiegszeit deutlich verringern. Damit aber wird es möglich, höhere Taktfrequenzen zu realisieren.

Die Lebensdauer der Glühlampe läßt sich mit der Maßnahme deutlich erhöhen, die im Patentanspruch 4 angegeben wird. Durch die Rücknahme der an der Glühlampe anliegenden Spannung auf die Bordnetzspannung liegt während der maximalen Helligkeit der Glühlampe nur die Bordnetzspannung an der Glühlampe an. Damit aber wird eine übermäßige Belastung, die bei ständigen Betrieb mit einer höheren Spannung gegeben wäre, vermieden.

In der Zeichnung ist ein Ausführungsbeispiel der Erfindung dargestellt. Es zeigt
- Fig.1: eine Schaltanordnung zur Realisierung des erfindungsgemäßen Verfahrens.
- Fig.2: ein Diagramm zur näheren Erläuterung der Erfindung.

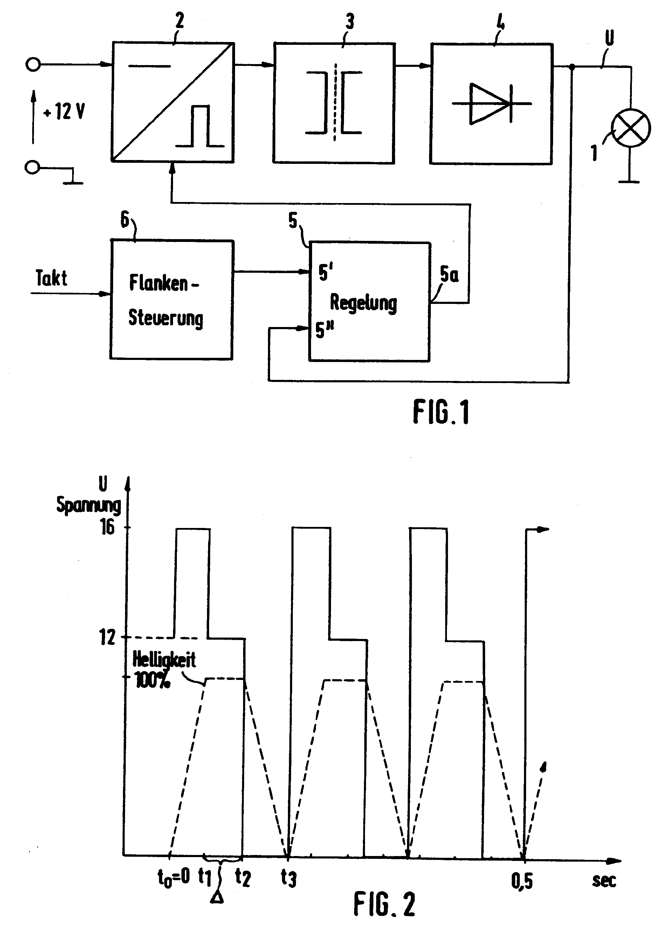

Die in Fig. 1 dargestellte Schaltanordnung dient dazu, eine Glühlampe 1 mit einer Taktfrequenz von 6 Hz und maximaler Helligkeit zu betreiben. Die Glühlampe 1 ist innerhalb einer nicht dargestellten Signalleuchte eines Kraftfahrzeugs angeordnet. Dabei handelt es sich beispielsweise um ein Blinkleuchte, die Teil einer Warnblinkanlage ist bzw. um eine Bremsleuchte, die bei einer negativen Beschleunigung des Kraftfahrzeugs eingeschaltet wird.

Die Glühlampe 1 wird, wie in Fig. 2 anhand eines Spannungs/Helligkeitsdiagramms zu Beginn ihrer Einschaltzeit mit einer Spannung versorgt, die höher als die Bordnetzspannung von hier angenommen 12 Volt ist. Hierzu wird die Bordnetzspannung mit Hilfe eines Zerhackers 2, eines nachgeschalteten Transformators 3 sowie eines Gleichrichters 4 in eine Gleichspannung umgewandelt, die sich zumindest zum Einschaltzeitpunkt t₀ der Glühlampe 1 auf einen Wert von 16 Volt einstellt.

Im Anschluß an den Einschaltzeitpunkt t₀ wird die wirksame Spannung U auf den Wert der Betriebsspannung (12 Volt) zurückgenommen. Die Zurücknahme erfolgt dabei so, daß der Wert von 12 Volt gerade dann (t₁) erreicht wird, wenn die Glühlampe 1 ihre maximale Helligkeit besitzt. Anschließend daran wird die wirksame Spannung U für eine Zeitdauer Δ , die mindestens gleich der Anstiegszeit t₁ - t₀ ist, auf dem Wert der Betriebsspannung gehalten. Die Glühlampe 1 leuchtet währenddessen mit maximaler Helligkeit. Anschließend (t₂) wird die Glühlampe 1 ausgeschaltet; ihre Helligkeit geht auf 0 zurück.

Anschließend, d.h. zum Zeitpunkt t₃ wiederholt sich der beschriebene Zyklus.

Diese Steuerung der wirksamen Betriebsspannung U für die Glühlampe 1 wird mit Hilfe einer Regeleinrichtung 5 vorgenommen, die an ihrem einen Eingang 5' das Ausgangssignal einer Flankensteuerungseinrichtung 6 erhält. Die Einrichtung 6 wird mit der Taktfrequenz (hier 6Hz) angesteuert.

Der zweite Eingang 5'' der Regeleinrichtung 5 greift die wirksame Betriebsspannung U der Glühlampe 1 ab und sorgt dafür, daß die Regeleinrichtung über ihren Ausgang 5a den Zerhacker 2 so betreibt, daß die in Fig. 2 dargestellte Kennlinie für die wirksame Betriebsspannung U den dargestellten Verlauf besitzt. Damit wird ein Betrieb der Glühlampe 1 erreicht, der sich durch einen raschen Anstieg der Helligkeit, einen Betrieb mit maximaler Helligkeit bei einer Betriebszeit (t1 bis t2) mit einer Länge, die größer der Anstiegszeit ist, sowie einer Taktfrequenz auszeichnet, die wie hier 6Hz die Wahrnehmbarkeit der Glühlampe 1 insbesondere unter schlechten Sichtbedingungen deutlich verbessert.

Nicht dargestellt ist eine weitere Ausgestaltung der Erfindung, derzufolge die Betriebssicherheit der Lampen noch zusätzlich gesteigert werden kann, wenn die erhöhte Ansteuerspannung nur dann zum Einsatz kommt, wenn schlechte Sichtverhältnisse vorliegen. Denn auch nur dann ist eine erhöhte Wahrnehmbarkeit von opt. Signalen besonders bedeutsam. Dies könnte dadurch erreicht werden, daß die Wahrnehmbarkeitssteigerung mit dem eingeschalteten Fahrlicht (indiziert schlechte Sichtverhältnisse wie starker Regen, Nebel, Nacht) kombiniert wird oder auch mit einem vorausgegangenen ABS-Bremsvorgang (indiziert Gefahrenbremsung).

## Patentansprüche

1. Verfahren zur Steigerung der Wahrnehmbarkeit einer Signalleuchte an Kraftfahrzeugen, die ein spannungsgesteuertes Leuchtelement enthält und die mit einer vorgegebenen Taktfrequenz betrieben wird, dadurch gekennzeichnet, daß die Taktfrequenz mindestens gleich 5 Hz ist und daß die bis zum Erreichen der maximalen Helligkeit des Leuchtelements erforderliche Anstiegszeit kleiner gleich der Leuchtdauer des Leuchtmittels mit maximaler Helligkeit eingestellt wird.

2. Verfahren nach Anspruch 1, gekennzeichnet durch Anwendung auf eine lichtemittierende Diode (LED) als Leuchtmittel.

3. Verfahren nach Anspruch 1, gekennzeichnet durch Anwendung auf eine Glühlampe (1) als Leuchtmittel, die mit einer gegenüber der Bordnetzspannung höheren Spannung (U) angesteuert wird.

4. Verfahren nach Anspruch 3, dadurch gekennzeichnet, daß die an der Glühlampe anliegende Spannung (U) am Ende der Anstiegszeit auf den Wert der Bordnetzspannung verringert wird.

## Claims

1. A method to increase the visibility of a motor vehicle warning light which contains a voltage-controlled light element and is operated at a predefined clock frequency, characterised in that the clock frequency is at least 5 Hz and that the rise time necessary for the light element to achieve maximum brightness is set to be less than, or equal to, the duration of maximum brightness of the light source.

2. A method according to Claim 1, characterised in that a light emitting diode (LED) is used as the light source.

3. A method according to Claim 1, characterised in that the light source is a filament lamp (1) which is controlled by a voltage (U) higher than that of the vehicle electrical system.

4. A method according to Claim 3, characterised in that the voltage (U) applied to the filament lamp is reduced to that of the vehicle electrical system at the end of the rise time.

## Revendications

1. Procédé pour augmenter la perception d'une lampe de signalisation sur des véhicules automobiles, cette lampe contenant un élément lumineux commandé en tension et étant exploitée avec une fréquence de commutation prédéfinie, procédé caractérisé en ce que la fréquence de commutation est au moins égale à 5 Hz et en ce que le temps de montée nécessaire pour atteindre la luminosité maximale de l'élément lumineux est réglé au-dessous de la durée d'éclairage de l'élément lumineux avec la luminosité maximale.

2. Procédé selon la revendication 1, caractérisé en ce qu'il est appliqué à une diode électroluminescente (LED) srvant de moyen lumineux.

3. Procédé selon la revendication 1, caractérisé en ce qu'il est appliqué à une lampe à incandescence (1) servant de moyen lumineux et commandée par une tension (U) plus élevée que la tension du réseau de bord.

4. Procédé selon la revendication 3, caractérisé en ce que la tension (U) s'appliquant à la lampe à incandescence est réduite, à la fin du temps de montée, à la valeur de la tension du réseau de bord.
